Europäisches Patentamt

European Patent Office

Office européen des brevets

(11) Numéro de publication : **0 319 362 B1**

# (12) FASCICULE DE BREVET EUROPEEN

(45) Date de publication du fascicule du brevet :
06.05.92 Bulletin 92/19

(51) Int. Cl.⁵ : **E02B 3/26,** B63B 59/02, B29C 67/18, B60R 19/42

(21) Numéro de dépôt : **88402891.1**

(22) Date de dépôt : **17.11.88**

(54) **Pièce de raccordement angulaire de profilés antichocs en élastomère pour la protection de murs ou de quais, de véhicules oude navires et son procédé de réalisation.**

(30) Priorité : **02.12.87 FR 8716844**

(43) Date de publication de la demande :
07.06.89 Bulletin 89/23

(45) Mention de la délivrance du brevet :
06.05.92 Bulletin 92/19

(84) Etats contractants désignés :
**AT BE CH DE ES FR GB GR IT LI LU NL SE**

(56) Documents cités :
**WO-A-87/00223**

(56) Documents cités :
**DE-A- 2 748 624**
**FR-A- 2 114 860**
**GB-A- 1 431 460**
**SCHIFF & HAFEN/KOMMANDOBRUECKE, vol. 9, no. 30, septembre 1978, page 855; "Fender von Phoenix"**

(73) Titulaire : **CAOUTCHOUC MANUFACTURE ET PLASTIQUES**
**143bis, rue Yves le Coz**
**F-78005 Versailles (FR)**

(72) Inventeur : **Mondellini, Michel**
**28, rue Albert Perdreaux**
**F-78140 Vélizy (FR)**

EP 0 319 362 B1

Jouve, 18, rue Saint-Denis, 75001 PARIS

## Description

L'invention est du domaine de la protection contre les chocs de véhicules ou de navires par une pièce élastique profilée, appliquée sur les murs ou les bords de quais à protéger. Réciproquement, les mêmes pièces peuvent équiper les véhicules ou les navires pour en limiter l'agressivité lors des contacts accidentels. Elle est plus précisément destinée à la protection des points singuliers en angle saillant, où la difficulté est d'appliquer un profilé élastique, généralement boudiné, assurant une déformabilité suffisante aux chocs portant sur l'angle.

On connait le procédé de protection contre les chocs consistant à disposer, sur la paroi, un profilé d'élastomère, à section constante, généralement réalisé par boudinage à travers une filière ayant la forme voulue, et vulcanisé en grandes longueurs, par exemple en autoclave sous pression de vapeur. L'art du caoutchoutier a perfectionné la forme creuse, issue d'un simple tuyau écrasable, jusqu'à lui donner une forme de lettre grecque Delta, dont l'épaisseur des parois varie de façon linéaire, lesdites parois étant quasiment rectilignes au repos. Sous l'effet de l'écrasement dû au contact entre le véhicule et le mur ou entre le navire et le quai, la courbure progressive des parois provoque une réaction d'appui que le concepteur cherche à rendre aussi constante que possible, jusqu'à l'écrasement total de la pièce, afin que le niveau d'absorption d'énergie soit maximal, pour une même masse d'élastomère. Le catalogue 125.35 de Kléber Industrie donne la description d'une famille de tels profilés, dont les dimensions sont homothétiques.

Pour la protection de parois courbes, sur des navires en particulier, le document FR-A-2 114 860 propose un dispositif amortisseur de chocs constitué d'un profilé en élastomère fixé à une pluralité de plaques planes métalliques, des rainures tranversales permettant une légère courbure.

Le point faible des solutions de protection des parois antérieurement connues réside dans la protection des points singuliers, tels que les angles saillants, particulièrement exposés aux chocs.

Le metteur en oeuvre se contente, en effet, le plus souvent, d'un raccordement de deux longueurs droites par coupe à 45 degrés d'une de leurs extrémités pour protéger un angle saillant à 90 degrés, angle de mur ou de quai le plus fréquent. Si cette solution, correctement réalisée, donne satisfaction sur le plan esthétique, elle est loin d'assurer, dans cette zone particulièrement exposée, une protection efficace contre les chocs.

L'invention a pour objet de résoudre les problèmes de protection de parois, aux points singuliers, en conservant, dans ces zones, des caractéristiques d'absorption d'énergie de même qualité que celles obtenues sur les parties droites, ce qui n'est pas le cas des solutions connues.

L'invention est constituée par une pièce de raccordement angulaire, réalisée en composition élastomérique et venant en continuité des profilés antichocs destinés à la protection de murs plans contre le choc de véhicules ou à celle des quais contre le choc de navires ou, symétriquement, à la protection de véhicules contre le contact brutal avec un mur ou celle de navires contre le contact brutal avec un quai.

L'invention porte, également, sur le procédé de fabrication de la pièce de raccordement angulaire des profilés antichocs qui sont, eux, destinés à la protection des parois planes.

La pièce de raccordement angulaire de profilés antichocs, objet de l'invention, réalisée en composition élastomérique, est caractérisée en ce qu'elle comporte, entre ses deux extrémités rectilignes, destinées au raccordement de profilés antichocs pour la protection des parois planes, un talon plein, muni à sa partie interne d'un alésage, ayant pour section environ les trois quarts d'un cercle et pour axe l'intersection des plans de fixation desdites extrémités rectilignes, ledit alésage assurant au talon plein la déformabilité nécessaire et permettant ainsi le raccordement des profilés antichocs selon un angle compris entre 60 et 120 degrés, pour protéger l'angle saillant formé par l'intersection de deux parois.

Dans une conception préférentielle, les faces de raccordement entre les faces internes des extrémités rectilignes et le talon plein sont inclinées à un angle compris entre 15 et 25 degrés par rapport au plan bissecteur des plans de fixation sur les parois à protéger. Le procédé de réalisation de la pièce de raccordement angulaire des profilés antichocs destinés à la protection des parois planes consiste en un traitement thermique, sous pression, dans un moule fermé ; il est est caractérisé en ce que, sur l'extrémité des sections droites de profilés non vulcanisées, destinées à la formation des extrémités rectilignes de ladite pièce de raccordement angulaire, un bourrage de même composition élastomérique, également non vulcanisé, mais ramolli par préchauffage, est écrasé par la fermeture du moule, dans la zone représentant la forme du talon plein, les formes intérieures de ladite pièce de raccordement angulaire étant imposées par l'utilisation d'un noyau en porte à faux.

La conception de la pièce de raccordement angulaire des profilés antichocs destinés à la protection des parois planes ainsi que celle de ses variantes sera mieux comprise à la lecture de la description accompagnant les dessins, dans lesquels :

– la figure 1 est une coupe axiale de la pièce de raccordement angulaire, en composition élastomérique, de forme optimisée ;

– la figure 2 représente, en coupe axiale, une variante de la pièce de raccordement angulaire convenant dans les cas où une faible déformabilité suffit ;

– la figure 3 illustre, en coupe axiale également, une autre variante de la pièce de raccordement angulaire, qui, elle, présente une grande déformabilité ;

– la figure 4 représente les moyens de fixation de la pièce de raccordement angulaire, selon l'invention ;

– la figure 5 schématise l'application de la pièce de raccordement angulaire à la protection d'une arête de deux parois non perpendiculaires.

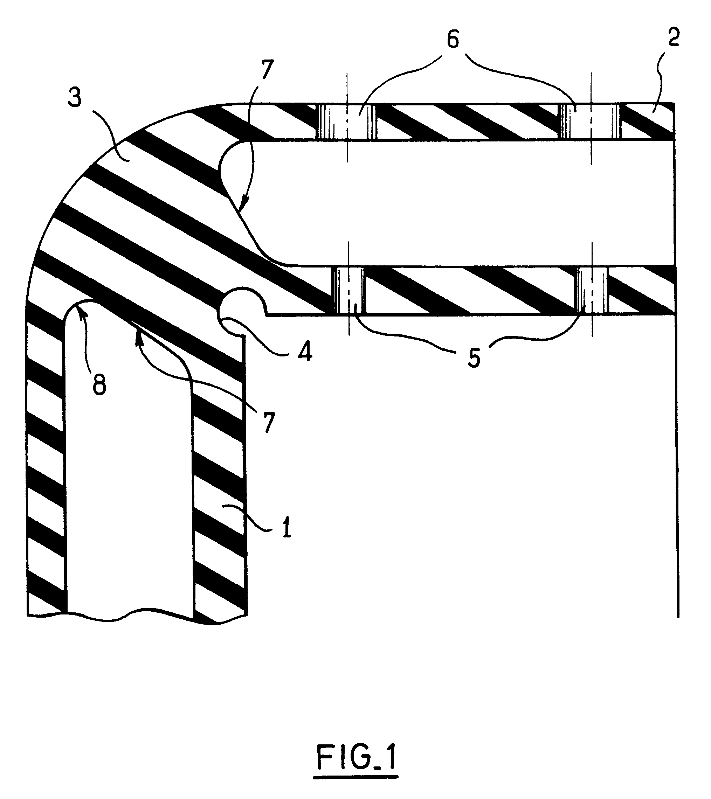

La figure 1 est une coupe axiale de la pièce de raccordement angulaire en composition élastomérique, de forme interne optimisée.

Les extrémités rectilignes (1) et (2) de la pièce de raccordement angulaire ont une section identique à celle des profilés antichocs de grande longueur, destinés à la protection des parties droites et planes des parois à protéger. Sur le côté (2) sont représentés des perçages (5) et (6) qui serviront, lors de la pose, à la fixation vissée de la pièce de raccordement angulaire avec des contreplaques intérieures au profilé.

Les faces internes des extrémités rectilignes (1) et (2) sont reliées entre elles par un talon plein (3), destiné à la protection contre les chocs de l'arête des parois, ledit talon plein (3) constituant le sommet de l'angle de raccordement.

Un alésage (4), ayant pour section environ les trois quarts d'un cercle est ménagé dans la partie interne du talon (3) de la pièce de raccordement angulaire, à l'opposé du sommet de l'angle de raccordement. Il a pour axe l'intersection des plans de fixation des extrémités rectilignes (1) et (2).

Cet alésage (4) constitue un évidement cylindrique qui viendra, lors de la pose, au contact de l'arête des parois à protéger et qui apporte une déformabilité au talon plein (3) qui, sans lui, viendrait prendre appui sur l'arête même des parois à protéger, ce qui le rendrait vulnérable.

Préférentiellement, il est donné au diamètre de l'alésage (4) une valeur voisine de celle de l'épaisseur de la base d'appui.

Les alésages (5) sur le côté (2) de la pièce de raccordement angulaire sont destinés à recevoir les vis de fixation. Les alésages (6), de diamètre supérieur à celui des alésages (5) permettent d'engager les vis de fixation et sont parfois obturés par des bouchons, en composition élastomérique, pour des raisons esthétiques ou pour assurer une protection des pièces de fixation contre la corrosion. Les faces (7) de raccordement entre les faces internes des extrémités rectilignes (1) et (2) et le talon plein (3) sont préférentiellement inclinées à un angle compris entre 15 et 25 degrés, par rapport au plan (P) bissecteur des plans de fixation sur les parois à protéger.

Chacun des rayons de raccordement (8) est avantageusement choisi sensiblement égal à l'épaisseur de la paroi concernée par ledit raccordement.

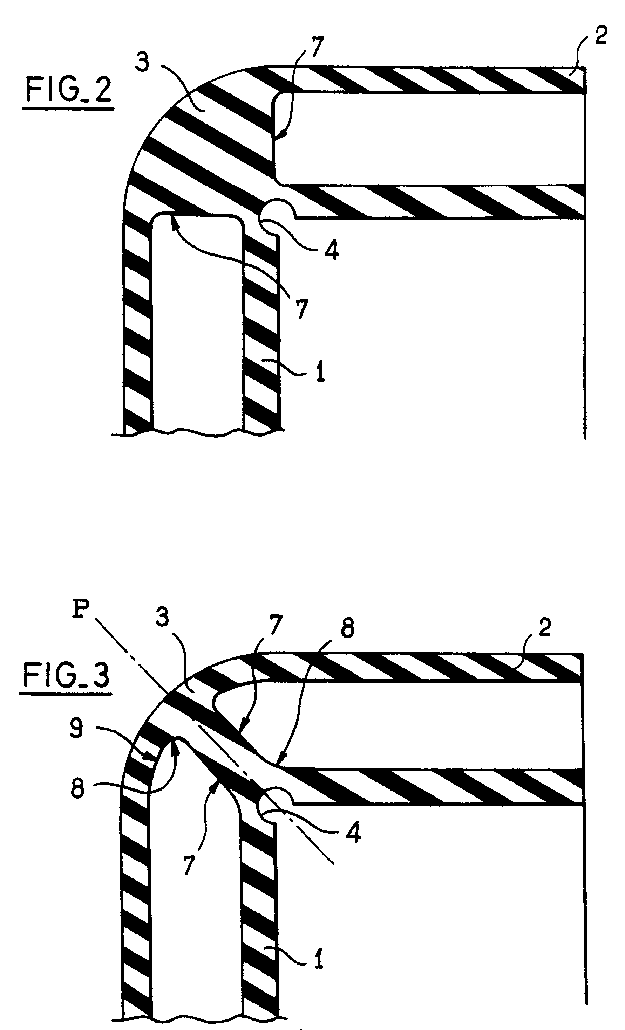

La figure 2 représente une variante de la pièce de raccordement angulaire convenant dans les cas de faibles déformabilités, par exemple pour la protection de véhicules légers contre des contacts brutaux avec une paroi rigide. Cette variante comporte, comme la précédente, un alésage (4) à la partide interne du talon plein (3). Les faces (7) de raccordement entre les faces internes des extrémités rectilignes (1) et (2) et le talon plein (3) sont perpendiculaires aux génératrices desdits côtés (1) et (2).

Cette disposition crée entre l'alésage (4) et les parois des côtés (1) et (2) une zone de faible section, particulièrement déformable par rapport au talon rigide (3). Sous l'effet d'un choc, il se produit une localisation des contraintes, dans ladite zone de faible section, qui pourrait devenir critique pour l'utilisation de la pièce de raccordement angulaire, bien qu'elle soit limitée par les rayons de courbure (8), ce qui restreint l'application de cette variante à la protection de parois ne pouvant être soumises qu'à des contacts de faible amplitude.

La figure 3 illustre une autre variante de la pièce de raccordement angulaire, présentant une grande flexibilité. Dans cette disposition, les faces internes des extrémités rectilignes (1) et (2) sont raccordées au talon (3) par des faces (7) parallèles au plan bissecteur (P) de la pièce de raccordement angulaire.

De ce fait le talon (3) présente une section massive très inférieure à celle des talons pleins des variantes précédentes et donc une grande déformabilité sous l'effet de l'écrasement dû à un choc.

L'importance du rayon de courbure (8) entre les faces (7) et leur raccordement aux faces internes des extrémités rectilignes (1) et (2) apparaît donc fondamentale, dans cette disposition, puisque, selon sa valeur, une courbure dans la zone (9) s'avère généralement nécessaire.

Comme la variante de la figure 2, la présente disposition sera limitée, en raison de sa grande flexibilité, à la protection de parois ne pouvant être soumises qu'à des contacts de faible amplitude.

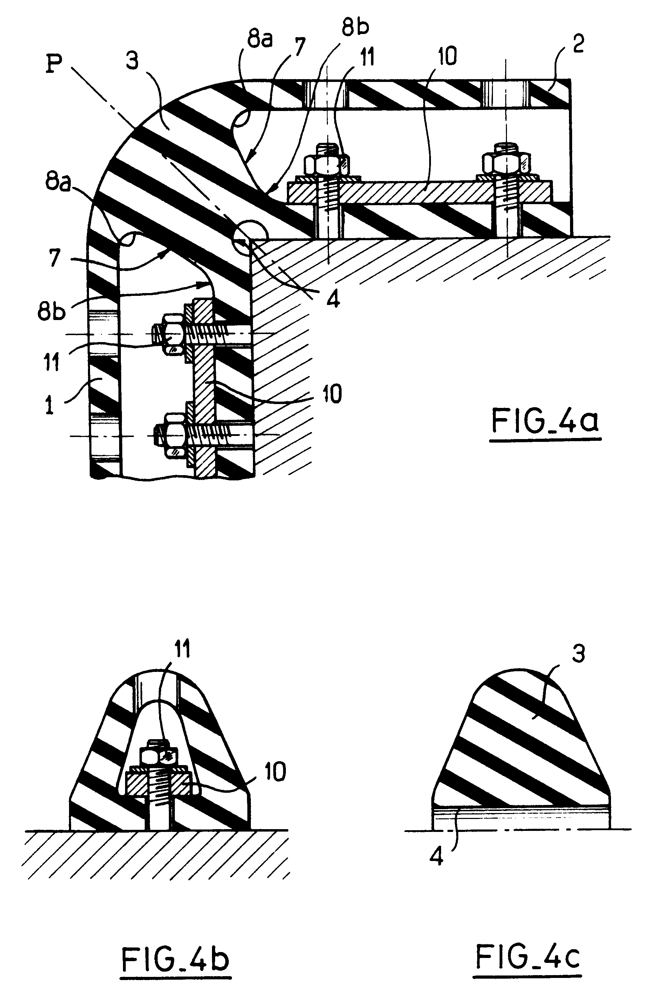

La figure 4, dans une vue en coupe axiale 4a de la pièce de raccordement angulaire, fait apparaître les éléments de fixation constitués d'un fer plat percé (10) et de ses vis de fixation (11). Le rayon de courbure entre les faces (7) et leur raccordement aux faces internes des extrémités rectilignes (1) et (2) doit être compatible, d'une part, avec la position prévue pour les fers plats de fixation (10), rigides, et, d'autre part, avec la déformabilité de la pièce elle-même, en composition élastomérique. La géométrie du dispositif suggère, comme disposition optimale, que les faces planes (7) fassent avec le plan bissecteur (P) des plans de fixation sur les parois à protéger un angle compris entre 15 et 25 degrés et que chaque rayon de courbure soit sensiblement égal à l'épaisseur de la paroi des côtés (1) et (2) concernée par le raccordement correspondant.

Dans cette configuration, il n'est pas nécessaire de prévoir une courbure dans la zone voisine de celle du raccordement (comme celà était le cas dans la zone (9) pour la disposition de la figure 3).

La distance des faces (7) au plan bissecteur (P) de la pièce de raccordement angulaire est déterminée par une épaisseur minimale entre le rayon de raccordement en (8b) et l'alésage (4), servant de dégagement à l'arête des plans de pose, ainsi que par une rigidité adaptée à celle des extrémités rectilignes (1) et (2) qui limitera la valeur maximale de la distance entre les faces (7) et le plan bissecteur (P), au fond de la partie creuse, au voisinage du talon plein (3), dans la région (8a), selon le rayon de raccordement.

Le rayon de raccordement (8b) se trouve également limité, vers les valeurs élevées, car il perturberait l'appui du fer plat (10) à son extrémité.

Le dégagement de l'arête des parois à protéger est assuré par l'alésage (4) dont le diamètre ne dépasse pas l'épaisseur des parois des extrémités rectilignes (1) et (2), sous le fer plat (10), car l'appui du talon plein (3), écrasé, lors d'un choc, au voisinage d'un plan, par exemple à 45 degrés pour un raccordement en angle droit, tel que (P) nécessite une réaction importante, se produisant le plus tôt possible au cours de l'écrasement. Si l'alésage (4) présentait un diamètre plus important, il se produirait une perte notable sur l'énergie absorbée par la déformation de l'élastomère dans la région de l'angle d'arête à protéger.

La vue 4b, simple section droite de l'extrémité rectiligne (1) ou (2), met en évidence le dispositif de fixation de la pièce de raccordement angulaire.

La vue 4c, montre une coupe par le plan bissecteur (P), donc dans la région du talon plein (3) muni de son alésage (4), qui, écrasé sous l'effet d'un choc, permet la déformabilité dudit talon plein (3).

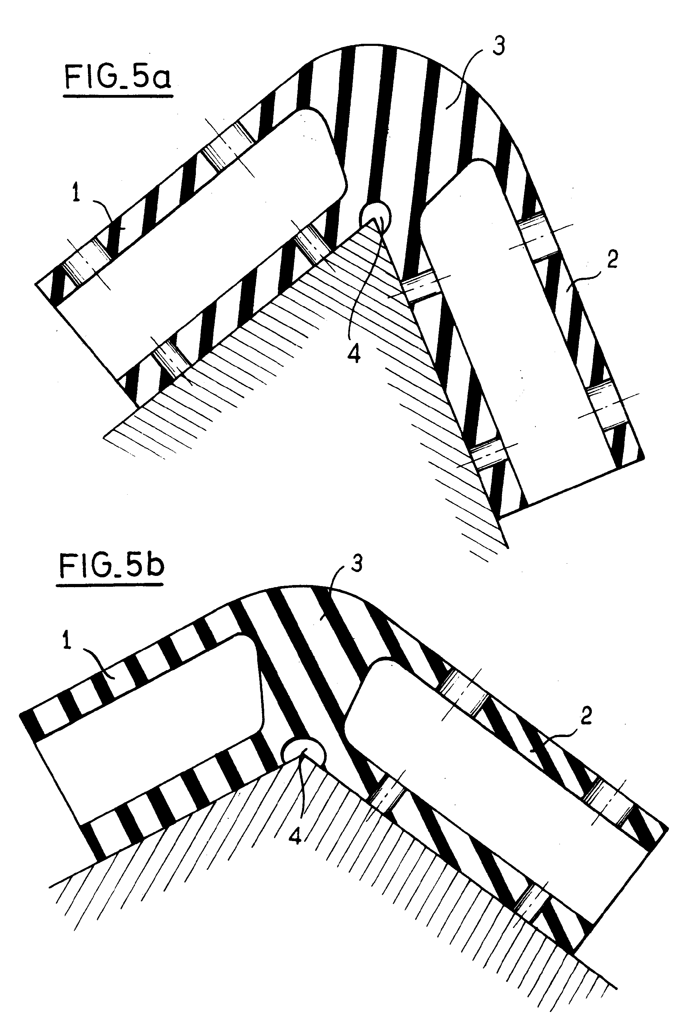

La figure 5 met en évidence l'intérêt de la déformabilité du talon plein (3) grâce à l'alésage (4) en schématisant l'application de la pièce de raccordement angulaire à la protection d'une arête de deux parois non perpendiculaires. La vue 5a montre l'utilisation de la pièce de raccordement angulaire à la protection d'une arête de deux parois formant un angle aigu. Les deux extrémités rectilignes (1) et (2) viendront se raccorder aux profilés antichocs destinés, eux, à la protection des parois planes, l'alésage (4) venant se fermer autour de l'arête à protéger et le talon plein (3), dont la section demeure sensiblement égale à ce qu'elle serait pour une protection d'angle droit, se déforme sous l'effet des modifications en masse, de faible valeur, propagées par traction des parois extérieures et qui se répercutent sur les extrémités rectilignes (1) et (2), sans modifier sensiblement leur section droite.

La vue 5b illustre l'utilisation de la pièce de raccordement angulaire à la protection d'une arête de deux parois formant un angle obtus. Les deux extrémités rectilignes (1) et (2) venant se raccorder aux profilés antichocs destinés à la protection des parois planes, l'alésage (4) vient s'ouvrir autour de l'arête à protéger et le talon (3) se déforme sous l'effet des modifications de faible valeur, propagées par compression et léger bombé, qui se répercutent sur les extrémités rectilignes (1) et (2), sans modifier sensiblement leur section droite.

Par conséquent, comme l'illustrent les différentes figures précédentes, la même pièce de raccordement angulaire des profilés antichocs peut être utilisée pour la protection d'angles de parois s'écartant jusqu'à 30 degrés de la perpendicularité, c'est-à-dire, pour la protection d'angles compris entre 60 et 120 degrés, sans que le talon plein (3) soit déformé de manière significative et, par conséquent, conférant à la pièce de raccordement angulaire les caractéristiques optimales d'absorption d'énergie. Le procédé de fabrication de la pièce de raccordement angulaire consiste en une opération de traitement thermique, sous pression, dans un moule fermé présentant les formes extérieures et intérieures de la pièce, cette opération de moulage, bien connue de l'industrie de transformation du caoutchouc, étant destinée à assurer, à la fois, la mise en forme de la pièce et la vulcanisation de la composition élastomérique.

Dans le moule sont engagées deux sections, de longueur appropriée, d'un profilé extrudé et non vulcanisé, ledit profilé constituant, par ailleurs, les éléments antichocs de protection des parois planes.

Les deux sections de profilé placées dans le moule constituent les extrémités rectilignes de la pièce de raccordement angulaire.

Un bourrage, de même composition élastomérique, non vulcanisée, ayant une masse très légèrement supérieure à celle nécessaire à la réalisation du talon plein, de forme quelconque et ramolli par préchauffage est introduit dans la zone du moule représentant la forme du talon plein et vient s'écraser, après fermeture du moule, sous l'effet de la pression, sur les longueurs droites de profilé constituant les extrémités rectilignes.

L'extrémité des longueurs droites de profilé opposée au talon plein est butée par un plan solidaire du noyau en porte à faux qui va imposer la forme intérieure dans les extrémités rectilignes ainsi que dans la zone du plan et des rayons de raccordement au talon.

La direction de fermeture du moule sera, préférentiellement, perpendiculaire au plan de symétrie de la pièce de raccordement angulaire afin d'équilibrer les contraintes sur lesdits noyaux en porte à faux. La pente conique sur la partie massive force la matière contre l'alésage de la partie interne du talon plein, lors de la fermeture du moule.

Par transmission de chaleur, à travers le moule, il y a réticulation de la composition élastomérique qui confère à la pièce de raccordement angulaire sa forme définitive.

En résumé, la pièce d'angle selon l'invention apporte une possibilité nouvelle pour protéger les arêtes de mur ou de quai, plus déformable, mais avec plus d'absorption d'énergie que ne le permettaient les solutions antérieures. Elle s'adapte, en outre, sans modification, à des angles aigus ou obtus, différant des valeurs habituellement orthogonales, et permet, par un simple moulage, de compléter une famille de profilés d'une section donnée.

Son procédé de jonctionnement, par exemple par emboîtage d'un profilé complémentaire, est identique à celui des longueurs droites courantes. Son esthétique, par la continuité de la surface extérieure, permet de l'utiliser en pleine vue aux arêtes de murs ou de quais, aux angles des véhicules ou des navires sans que ces points singuliers soient plus fragiles que les parties droites.

Sans sortir du cadre de l'invention defini par les revendications, l'homme de l'art peut apporter divers modifications à la pièce de raccordement angulaire de profilés antichocs destinés à la protection de parois planes, et à ses variantes, décrites à titre d'exemples non limitatifs.

## Revendications

1. Pièce en composition élastomérique, de raccordement angulaire de profilés antichocs destinés à la protection de parois planes, caractérisée en ce qu'elle comporte, entre ses deux extrémités rectilignes (1) et (2), destinées au raccordement de profilés antichocs, un talon plein (3), muni à sa partie interne d'un alésage (4), ayant pour section environ les trois quarts d'un cercle et pour axe l'intersection des plans de fixation desdites extrémités rectilignes (1) et (2), ledit alésage (4) assurant la déformabilité du talon plein (3) et permettant le raccordement des profilés antichocs selon un angle compris entre 60 et 120 degrés, pour protéger l'angle saillant formé par l'intersection de deux parois à protéger.

2. Pièce de raccordement angulaire selon la revendication 1, caractérisée en ce que les faces (7) de raccordement entre les faces internes des extrémités rectilignes (1) et (2) et le talon plein (3) sont inclinées à un angle compris entre 15 et 25 degrés par rapport au plan bissecteur (P) des plans de fixation sur les parois à protéger.

3. Pièce de raccordement angulaire selon l'une des revendications 1 ou 2, caractérisée en ce que chaque rayon de raccordement (8) des faces (7) et des parois des extrémités rectilignes (1) et (2) est égal à l'épaisseur de la paroi concernée par ledit raccordement.

4. Procédé de fabrication d'une pièce de raccordement angulaire de profilés antichocs conforme à l'une des revendications 1 à 3, par traitement thermique sous pression dans un moule fermé, caractérisé en ce que, sur l'extrémité de sections droites de profilés, non vulcanisées, destinées à la formation des extrémités rectilignes (1) et (2) de ladite pièce de raccordement angulaire, un bourrage de même composition élastomérique, également non vulcanisé mais ramolli par préchauffage, est écrasé par la fermeture du moule, dans la zone représentant la forme du talon plein (3), les formes intérieures de ladite pièce de raccordement angulaire étant imposées par l'utilisation d'un noyau en porte à faux.

## Patentansprüche

1. Elastisches Teil zur winkelförmigen Verbindung stoßdämpfender Profile zum Schutz von ebenen Wänden dadurch gekennzeichnet, daß es zwischen seinen zwei geradlinigen Enden (1) und (2), die mit den stoßdämpfenden Profilen verbunden werden sollen, einen aus dem Vollen gearbeiteten Wulst (3) aufweist, der auf seiner innenliegenden Seite mit einer Bohrung (4) ausgestattet ist, deren Querschnitt ungefähr drei Viertel eines Kreises ausmacht und deren Achse durch den Schnitt der Befestigungsflächen der genannten, geradlinigen Enden (1) und (2) gebildet wird, wobei die Bohrung (4) die Verformbarkeit des aus dem Vollen gearbeiteten Wulstes (3) gewährleistet und die Verbindung der stoßdämpfenden Profile unter einem Winkel zwischen 60 und 120° ermöglicht, um die vorspringende Ecke, die durch den Schnitt der zwei zu schützenden Wände gebildet wird, zu schützen.

2. Winkelförmiges Verbindungsteil nach Anspruch 1 dadurch gekennzeichnet, daß die Verbindungsflächen (7) zwischen den Innenflächen der geradlinigen Enden (1) und (2) und dem aus dem Vollen gearbeiteten Wulst (3) mit der winkelhalbierenden Ebene (P) der Befestigungsflächen auf den zu schützenden Wänden einen Winkel zwischen 15 und 25° bilden.

3. Winkelförmiges Verbindungsteil nach einem der Ansprüche 1, oder 2, dadurch gekennzeichnet, daß jeder Verbindungsradius (8) der Flächen (7) mit den Wänden der geradlinigen Enden (1) und (2) gleich der Dicke der von dieser Verbindung betroffenen Wand ist.

4. Verfahren zur Herstellung eines winkelförmigen Verbindungsteils für stoßdämpfende Profile nach einem der Ansprüche 1 bis 3, durch Wärmebehandlung unter Druck in einer geschlossenen Form, dadurch gekennzeichnet, daß auf das Ende der Querschnitte der nicht vulkanisierten Profilstücke, die zur Ausbildung der geradlinigen Enden (1) und (2) des genannten, winkelförmigen Verbindungsteils bestimmt sind, ein ebenfalls nicht vulkanisierter, aber durch Vorerhitzung erweichter Zwickel durch das Schließen der Form aufgedrückt wird, u.zw. im Bereich, der der Form des aus dem Vollen gearbeiteten Wulstes (3) entspricht, wobei die Innenformen des genannten, winkelförmigen Verbindungsteils durch Verwendung eines freitragenden Kernes aufgedrückt werden.

## Claims

1. An angular connecting piece of elastomeric composition, for shockproof profiles intended for protecting flat walls, characterised in that it comprises, between its two rectilinear ends (1) and (2), intended for connecting shockproof profiles, a solid heel (3), provided in its inner part with a groove (4), having as its cross-section approximately three-quarters of a circle and as its axis the intersection of the fixing planes of said rectilinear ends (1) and (2), said groove (4) ensuring that the solid heel (3) is deformable and permitting the connection of the shockproof profiles at an angle of between 60 and 120 degrees, to protect the protruding angle formed by the intersection of two walls to be protected.

2. An angular connecting piece according to Claim 1, characterised in that the joining faces (7) between the inner faces of the rectilinear ends (1) and (2) and the solid heel (3) are inclined at an angle of between 15 and 25 degrees relative to the plane (P) bisecting the planes for fixing to the walls to be protected.

3. An angular connecting piece according to one of Claims 1 or 2, characterised in that each radius (8) joining the faces (7) and the walls of the rectilinear ends (1) and (2) is equal to the thickness of the wall concerned with such joining.

4. A process for manufacturing an angular connecting piece for shockproof profiles in accordance with one of Claims 1 to 3, by heat treatment under pressure in a sealed mould, characterised in that, on the extremity of non-vulcanised straight profile sections, intended to form the rectilinear ends (1) and (2) of said angular connecting piece, a filler of the same elastomeric composition, also not vulcanised but softened by pre-heating, is crushed by the closing of the mould, in the area representing the form of a solid heel (3), the inner forms of said angular connecting piece being imposed by the use of a projecting core.

FIG_1

FIG.2

FIG.3

FIG_4a

FIG_4b

FIG_4c

FIG_5a

FIG_5b